# Europäisches Patentamt
# European Patent Office
# Office européen des brevets

(19)

(11) Publication number: **0 118 145**
**B1**

(12)
# EUROPEAN PATENT SPECIFICATION

(45) Date of publication of patent specification: **30.12.86**

(51) Int. Cl.⁴: **H 04 N 5/76**

(21) Application number: **84200145.5**

(22) Date of filing: **03.02.84**

(54) **Portable electronic video recording system.**

(30) Priority: **08.02.83 NL 8300467**

(43) Date of publication of application:
**12.09.84 Bulletin 84/37**

(45) Publication of the grant of the patent:
**30.12.86 Bulletin 86/52**

(84) Designated Contracting States:
**AT BE CH DE FR GB IT LI NL**

(56) References cited:
**US-A-3 372 887**
**US-A-4 057 830**

**FUNKSCHAU, no. 26, December 1982, pages 50-51, Munich, DE, R. AUER: "Kamera steuert Recorder"**

**IDEM
SMPTE JOURNAL, vol. 89, no. 12, December 1980, pages 942-945, Scarsdale, New York, US, M. MAREY: "Fiber-optical signal transmission between a TV camera and its base station"**

**JOURNAL OF THE SMPTE, vol. 84, no. 8, August 1975, pages 607-609, New York, US, D.M. RODY: "A 22-lb, 1/4-in portable color video camera/recorder system"**

(73) Proprietor: **N.V. Philips' Gloeilampenfabrieken
Groenewoudseweg 1
NL-5621 BA Eindhoven (NL)**

(72) Inventor: **Van Der Brug, Gerard Johannes
c/o INT. OCTROOIBUREAU B.V. Prof. Holstlaan 6
NL-5656 AA Eindhoven (NL)**
Inventor: **Speakman, John Collyer
c/o INT. OCTROOIBUREAU B.V. Prof. Holstlaan 6
NL-5656 AA Eindhoven (NL)**
Inventor: **Van Weele, Paul Johannes Frits
c/o INT. OCTROOIBUREAU B.V. Prof. Holstlaan 6
NL-5656 AA Eindhoven (NL)**

(74) Representative: **Van Weele, Paul Johannes Frits
et al
INTERNATIONAAL OCTROOIBUREAU B.V. Prof.
Holstlaan 6
NL-5656 AA Eindhoven (NL)**

(56) References cited:
**FERNSEH- UND KINO-TECHNIK, vol. 36, no. 9, September 1982, page 369, Berlin, DE, "Neue Produkte"**

## Description

The invention relates to a portable electronic video recording system comprising: a portable electronic camera; switching means for switching the power-supply voltage on and off and for controlling the various functions of the system, which means comprise stand-by switching means for switching on and switching off the electric power supply to other switching means so that the system is ready for making a recording, and recording switching means for controlling the recording function of the system after the stand-by switching means have been switched on; a portable recorder for recording picture signals supplied by the camera on a recording medium; a case having a recorder compartment for carrying the recorder and provided with carrying means and transmission means for the transmission of signals and, if desired, the power-supply voltage between the camera and the system parts in the case, which parts comprise at least the recorder and may comprise a voltage source.

Such a portable electronic video recording system is disclosed in document "Funkschau", No. 26, December 1982, pages 50—51, Munich, "Kamera Steuert Recorder". Portable electronic video recording systems of the above type are marketed by several manufacturers and form an alternative to cine-cameras. Until now, however, their use has apparently been limited by the comparatively high cost of such a video recording system and the comparatively high weight of portable recorders. This is mainly due to the fact that the portable recorders available practically always belong to one of the three current video recorder systems, namely VHS, BETAMAX or V2000. So far attempts have been made by various recorder manufacturers to use cassettes of smaller dimensions which are compatible with recorders belonging to one of these systems, enabling the dimensions and weight of the portable recorders to be reduced. The smaller cassettes can be played on the normal video recorders belonging to the system by using an adapter.

Currently, attempts are also being made to arrive at a globally accepted video-recorder standard employing a standard cassette which in comparison with the cassettes of the present systems has substantially smaller dimensions. This would in particular promote the use of portable video recording systems. It has already been proposed from various sides to incorporate the recorders in the cameras, resulting in electronic video recording systems which resemble the well-known cine-cameras employing easily and rapidly exchangeable film cassettes.

However, the incorporation of the recorder in the camera has several drawbacks. Firstly, a deck equipped with a rotary magnetic-head drum and a drive mechanism for the transport of the magnetic tape past the rotary head drum can never be as small and as light as the deck of a cine-camera. Even if a small cassette is used the recorder will have a comparatively high weight. Another problem is the power supply of the tape-deck and the electronic circuitry in the camera. For various reasons the power consumption per unit of time of a portable electronic camera with built-in deck is substantially higher than that of a cine-camera. In addition film cassettes can contain a recording lasting a maximum of $3\frac{1}{2}$ minutes, whereas for video cassettes a maximum duration of the order of 1 hour is envisaged. Therefore, it will be necessary to incorporate a comparatively bulky and heavy power source in the electronic camera. In view of this it is envisaged that a portable electronic video recording system comprising a camera with built in tape-deck will have a substantially higher weight than the current cine-camera, many types of such cameras being already considered too heavy by the consumer.

The invention provides a portable electronic video recording system of the type mentioned in the opening paragraph, which is suitable for use in conjunction with a small video cassette and is characterized in that the case has a camera compartment for accommodating and carrying the camera; if the transmission means comprise connecting means for establishing a connection between the camera and the system parts contained in the case these connecting means will readily allow the camera to be placed in the camera compartment, to be carried therein and to be removed therefrom whilst said connection is maintained; and, after said connecting means, if present, have been connected to establish said connection, and after the stand-by switching means have been switched on while the camera is still in the camera compartment of the case, to start the recording it is necessary to remove the camera from the case and to actuate the recording switching means.

The invention ingeniously utilizes the fact that it is always useful to have an everready case at hand when using a camera. Such cases are generally used with cine-cameras and allow the camera to be stored safely and to be carried conveniently after an exposure has been made. This may also be desirable with electronic cameras. Therefore, the basic concept of the present invention is to gain advantage from the necessity of having to carry an everready case by accommodating at least the recorder and, if desired, other parts of the video recording system in the everready case, so that the weight can be divided in a logical manner between the camera and the everready case. In this respect it must be borne in mind that in general it will be desirable to minimize the weight of the camera, which has to be supported by the user and held up to the eye in use. It is less tiring to carry an object of substantial weight in a case provided with a shoulder strap than in the hand, particularly when the hand is to be held roughly at shoulder level. The steps in accordance with the invention lead to a more convenient distribution of the weight of the video recording system between the everready case and the camera, while retaining the desired functions of the system.

Within the scope of the invention several embodiments are possible. It is possible to accommodate a power source for both the video recorder and the camera in the everready case. However, it is also possible to accommodate a separate power source for the camera in the camera itself, and in principle it is even possible to accommodate the power source for the video recorder in the camera, although this seems to be less desirable in view of the appropriate distribution of weight between the camera and the everready case. Obviously the camera and the cassette recorder should be interconnected for the transmission of signals between them, such as audio and video signals and command signals.

A first embodiment of the invention, in which the camera and the video recorder are interconnected by means of a flexible cable comprising at least one core for the transmission of wide-band information signals, has the advantage that the cable can be comparatively thin and flexible, and is characterized in that said core comprises an optical fibre, the camera is equipped with an optical transmitter comprising a radiation source and modulation means for modulating the intensity of the radiation emitted by the radiation source with the wide-band information and the case contains an optical receiver which comprises a radiation-sensitive electronic element for converting the radiation modulation into an electrical modulation.

The principal advantage of the use of an optical fibre is that it combines a large capacity for the transmission of signals with a small diameter and a high flexibility, an additional advantage being that the fibre need not be shielded from extraneous electromagnetic fields.

It is noted that document SMPTE Journal Volume 89, No. 12, December 1980, pages 942—945, Scarsdale, New York, "Fiber-optical signal transmission between a TV-camera and its base station" discloses a connection between a camera and its base station with an optical fibre together with the corresponding transmitter and receiver.

The above cited document "Funkschau" also discloses a connection between a camera and a recorder via a flexible cable. A further embodiment aims at minimizing the inconvenience of the presence of such a cable and is characterized in that the case contains an automatic cable winder which comprises a rotatable drum for taking up and unwinding the cable, a drive means for driving the drum during take-up and a locking device for locking the drum when the cable is fully or partly unwound.

Such a cable winder is known from US—A—3.372.887 and is, for example, frequently used in domestic appliances, particularly in vacuum cleaners. The drive means for driving the drum generally comprises a simple spring motor whose spring is wound when the cable is pulled out. Therefore, no electric driving power is required because the energy required for taking up the cable is supplied by the user of the apparatus when he pulls out the cable.

It may also be advantageous to use an embodiment of the invention which is characterized in that the transmission means comprise wireless transmission means for the wireless transmission of signals between the camera and the system parts in the case, which means comprise at least one transmitter and one receiver. The wireless transmission of signals between the camera and the system parts in the case permits the use of an even thinner and more flexible cable between the camera and the everready case. When the camera is provided with a separate power source, the cable may even be dispensed with altogether. If the case is provided with a shoulder strap an embodiment of the invention may be utilized which is characterized in that the shoulder strap carries aerial means for the wireless transmission means, which aerial means are connected to the system parts in the case. The carrying strap is eminently suitable for this additional function and moreover it is situated close to the camera.

A major advantage of the video recording system in accordance with the invention, in which the camera can be accommodated in an everready case which contains the video recorder and other parts belonging to the video recording system, is that embodiments may be used which are characterized in that the system, when the camera is in the case, can be used as a stationary picture-reproducing system that can be placed on a table top for reproducing video signals previously recorded on the recording medium, and for this purpose the system comprises a picture screen, means for reading the video signals on the recording medium and reproducing them on the picture screen, means for carrying out at least the "fast reverse" and "play" functions of the recorder and switching means for controlling these functions.

An electronic camera having a built-in video recorder and equipped with an electronic viewfinder may also be used as picture, reproducing system, but this would also require the system to be held up to the eye, which is generally considered to be an unnatural and fatiguing position for the arms, particularly when the system is not used for recording. The invention provides a video recording system which, when used for picture reproducing can be placed on a table top and then operates in the same way as the customary picture-reproducing systems. If may then be advantageous to use an embodiment of the invention which is characterized in that the system comprises supporting means which are capable of supporting the case on a table top in an oblique position relative to the table top. In the oblique position of the case the picture screen should be disposed substantially perpendicularly to the line of sight of person sitting at the table and looking at the screen.

Moreover, if the case is substantially of box form and comprises two major walls interconnected by side walls, it may be advantageous to use an embodiment of the invention which is characterized in that the supporting means are arranged on a major wall so as to be movable between a rest position and a supporting position and in the supporting position can support the case in said oblique position on a table top with the said major wall facing the table top.

In electronic cameras equipped with an electronic viewfinder the camera comprises a built-in picture screen which may be used for displaying pictures recorded on the recording medium. An embodiment of the invention is characterized in that during use of the system as a stationary picture reproducing system 1) the built-in picture screen on the camera can be viewed from outside the case and 2) *via* the transmission means the picture signals can be transmitted from the recorder to the built-in picture screen of the camera, so that this built-in picture screen can be used for reproducing the video signals previously recorded on the recording medium.

Also when the camera is contained in the everready case, the built-in screen in this embodiment can be viewed from outside the case, whilst moreover the transmission means between the camera and the video recorder carry out at least part of their function when the camera is situated in the case. A drawback of the use of the built-in picture screen on the camera may be that for satisfactory viewing the screen has to be viewed through the eyepiece, with only a small distance between eye and eyepiece. Therefore, it is advantageous to use an embodiment of the invention which is characterized in that the system comprises an optical magnifier which can be carried in the case, for magnifying the picture on the built-in picture screen of the camera when the system is used as a stationary picture-reproducing system. Thus, the built-in picture screen can be viewed from a greater distance. It may be advantageous to use an embodiment which is characterized in that the case has a wall with an aperture through which the built-in picture screen on the camera can be viewed when the system is used as a stationary picture-reproducing system, and an optical magnifier is arranged in said aperture.

Generally, portable electronic video recording systems are equipped with a microphone and the recorder is adapted to record the audio signals from the microphone on the recording medium. This enables the sound to be recorded in synchronism with the pictures during video recording. However, a more ambitious amateur will also require a facility for asynchronous sound recording, for example in order to introduce a video programme and to provide it with an explanatory text about the location of recording, the precise facts on the events recorded, the names of persons occurring in the recording, etc. An embodiment of a video recording system in accordance with the invention which, like the embodiments already described, can also be used as a stationary picture reproducing system, is characterized in that the system, when used as a stationary picture-reproducing system, is capable of reproducing sound signals recorded on the recording medium and comprises a loudspeaker and means for reading and, *via* the loudspeaker, reproducing the audio signls recorded on the recording medium. Thus, immediately after recording the user can monitor not only the picture but also the accompanying sound. This not only provides more satisfaction than merely displaying the picture, as is customary in known video recording systems with a playback facility, but it also enables the user to check immediately after recording whether and to what extent an explanatory text is required and to collect the necessary data at the relevant location immediately after the recording. It may be advantageous to utilise an embodiment of the invention which is characterized in that the loudspeaker is accommodated in the case and in that switching means are provided for switching on and off the loudspeaker independently of other functions and control means are provided for controlling the level of sound produced by the loudspeaker. In this embodiment the everready case is also employed as a loudspeaker enclosure and the audio amplifier is equipped with the customary controls.

In view of the foregoing it is interesting, if the camera is equipped with a microphone for recording audio signals in synchronism with the video signals, to use an embodiment of the invention which is characterized in that during use as a stationary picture-reproducing system the system is capable of asynchronous addition of sound to the recorded pictures, for which purpose *1.* the microphone can intercept sounds from outside the case and *2.* audio signals from the microphone can be transmitted to the recorder *via* the transmission means and the system comprises means for recording the audio signals during reproduction of the video signals.

This embodiment of the invention permits the asynchronous addition of the desired audio information to the recorded pictures and sound *via* the microphone associated with the camera immediately after recording and after collecting the required data.

The invention will now be described in more detail, by way of example, with reference to the drawings, in which

Fig. 1 is a side view of a system in accordance with the invention, carried by a user,

Fig. 2 is a perspective view showing the camera with the grip folded in and showing the case with the cover and carrying strap removed.

Fig. 3 is a perspective view of the system when used as a stationary reproducing system,

Fig. 4 is a perspective side view of a slightly different embodiment of the invention, and

Fig. 5 is a perspective view of the system shown in Fig. 4 when used as a stationary picture reproducing system with the camera placed in the case, the picture being viewed *via* a lens in the wall of the case.

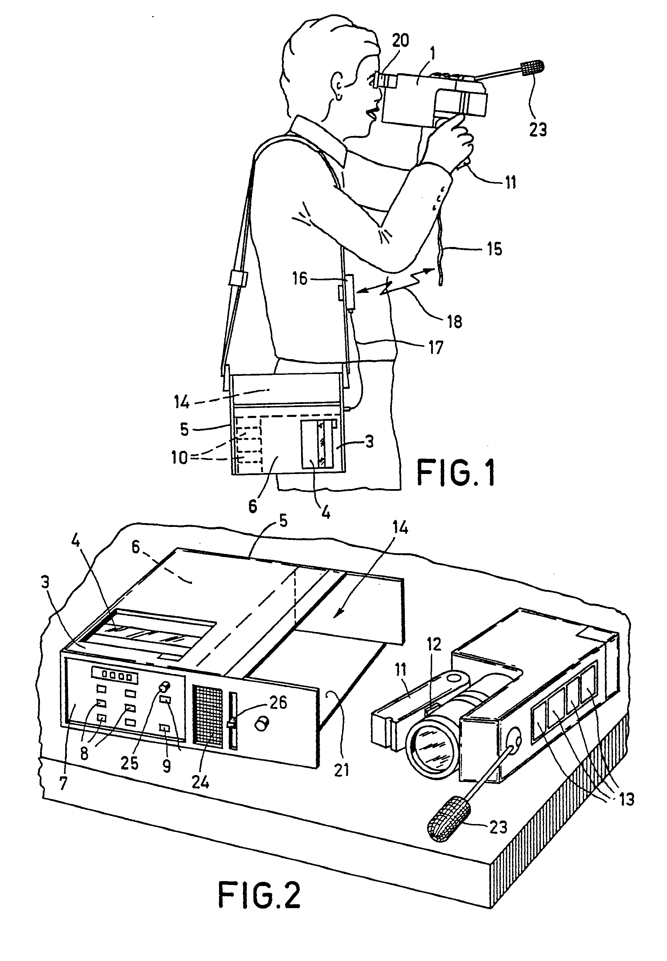

The portable electronic video recording system shown in Fig. 1 comprises a portable electronic camera 1 and a magnetic video recorder 3 which can be carried by means of a shoulder strap 2. This video recorder is adapted to cooperate with magnetic-tape cassettes which can be inserted into and removed from the recorder *via* a cassette holder 4. Since electronic cameras and video cassette recorders are generally known the camera 1 and recorder 3 are not shown in more detail. The video recorder 3 is accommodated in a case 5 having a recorder compartment 6 for containing the recorder. On one side of the case 5 a control panel 7 is located, which panel carries a number of controls for the video recorder, such as pushbuttons 8. This panel may also carry pushbuttons 9 for actuating switching means — not shown but of conventional type — for switching the electric power supply on and off and for controlling the various functions of the system. These switching means include stand-by switching means for switching on or switching off the electric power supply to other switching means, for example for starting the motors of the video cassette recorder and the associated electronic circuitry in order to prepare the system for making a recording. The case 5 also contains a power source in the form of a number of batteries 10. The batteries may alternatively be located outside the case, in known manner, for example in a belt or in a separate unit which can be attached to the outside of the case.

The camera 1 comprises a separate power source, for example also in the form of batteries. This is not shown in the drawing but is known *per se*. The camera is provided with a grip 11 and a push-button 12 for actuating the recording switching means for controlling the recording function of the system after the said stand-by switching means have been switched on. The various switching means which may be used are not shown in detail. For a description reference is made to, for example, DE—A—30 43 041. On the upper side the camera 1 is provided with a number of buttons 13, one of which may serve for example for switching on the power supply to the electrical circuitry in the camera.

For making a recording it is necessary, when a camera is equipped with a built-in electronic viewfinder, that the viewfinder picture is visible and all circuits in the camera are ready to supply picture signals to the video recorder 3 when the recording button 12 is pressed. The video recorder must be ready to transport the magnetic tape and to record the video and generally also the audio signals supplied by the camera when the recording button of the camera is actuated. It is therefore necessary that in addition to video and audio signals, command signals can be transmitted from the camera to the video recorder. Moreover, when the video recorder records video and audio signals it is desirable that this is signalled to the camera, so that the user can see that recording is actually taking place when the button 12 is pressed.

In accordance with the invention the case 5 not only serves for carrying the video recorder but also serves as an everready case for carrying the camera 1 in a camera compartment 14 provided in the case. In order that the camera shall be ready for making recordings immediately it has been taken out of the camera compartment of the case, it is necessary that the connecting means in the form of a cable or the like, which establish a connection between the camera 1 and the system parts situated in the case and which are incorporated in the transmissionmeans, will, if present, readily allow the camera to be placed in the camera compartment, to be carried therein and to be removed therefrom while said connection is maintained. In the embodiment shown in Figs. 1 to 3 no connecting cable is used.

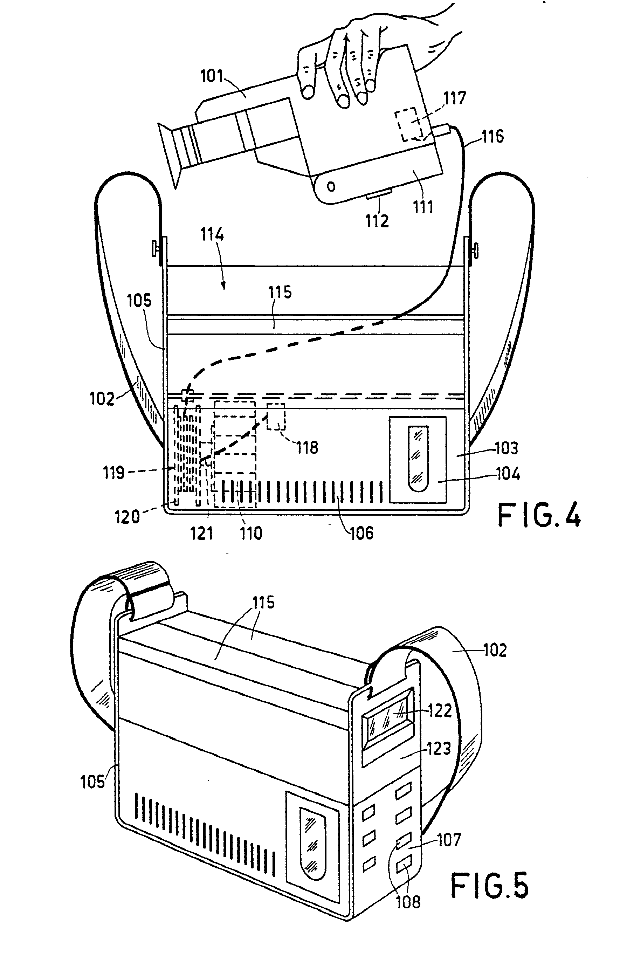

An embodiment of a video recording system in which a connection is provided by a cable between the camera and the system parts in the case is shown in Figs. 4 and 5. It will be necessary to connect this cable previously to the camera and the system parts in the case, for example by means of conventional connectors, and to actuate the stand-by switching means in advance if it is desired for making a recording it is necessary only to take the camera out of the case and to actuate the recording switching means. Figs. 4 and 5 show a portable electronic video recording system which closely resembles but in some respects differs from the video recording system shown in Figs. 1 to 3. It comprises an electronic camera 101, a video recorder 103 with a cassette holder 104 and a carrying case 105 with a recorder compartment 106, a carrying strap 102 and a camera compartment 114 for the camera 101. The camera compartment can be closed by means of two hinged covers 115. A control panel 107 carries controls 108 for the video recorder. A number of batteries 110, both for the power supply of the video recorder and of the camera are located in the case.

The camera 101 is connected to system parts contained in the case 105 by connecting means, which are incorporated in the transmission means, in the form of a flexible cable 116 which is suitable both for transmitting the supply voltage to the camera and for transmitting video, audio and other signals between the camera and the case. At least one of the cores of the cable comprises optical fibre. This is not shown in more detail. The optical fibre is incorporated in the cable in known manner amongst metal current conductors and serves for transmitting wide-band information signals, *i.e.* primarily the video and audio signals. The camera is provided with an optical transmitter 117, shown symbolically in Fig. 4, which is at least suitable for converting an electrical modulation into a modulation of the intensity of the radiation emitted by a radiation source and to couple the modulated radiation into the optical fibre. The case accommodates an optical receiver, symbolically represented by the rectangle 118, which receiver, in conventional manner, comprises a radiation-sensitive electronic element such as a photodiode for converting the modulation of the light beam emerging from the optical fibre into an electrical modulation.

The case 105 contains an automatic cable winder 119 comprising a rotatable drum 120 for taking up and unwinding the cable 116. A drive means 121 comprises a wound spring, not shown, for driving the drum 120 during take-up. There is also provided a locking device, not shown, for locking the drum when the cable is fully or partly unwound. The cable winder is not shown in full detail but may be of a known type such as is frequently used in, for example, vacuum cleaners and small domestic appliances. A suitable cable winder is described in, for example, US—A—3,372,887 mentioned already above.

In the portable electronic video recording system shown in Figs. 1 to 3 the camera is equipped with separate batteries, so that it is not necessary to supply electric power from the case to the camera. For the transmission of the signals between the camera and the system parts in the case, wireless transmission means are used. A freely suspended aerial wire 15 is connected to the camera 1 and an aerial module 16, attached to the strap 2, is connected to the case by a cable 17. The wireless transmission between aerial 15 and module 16 is symbolically represented by the arrow 18. The wireless transmission of the signals between the aerial 15 and the module 16 is effected by means of electromagnetic waves. In principle, a modification is possible such that wireless signal transmission is effected by means of infra-red radiation. A tranceiver module may then be attached to the carrying strap 2 near the user's shoulder at a location close to the camera. The camera also is provided with a tranceiver unit which, when the camera is hold up to the eye, is directed at the module on the carrying strap. This has the advantage that a maximum signal-to-noise ratio is obtained.

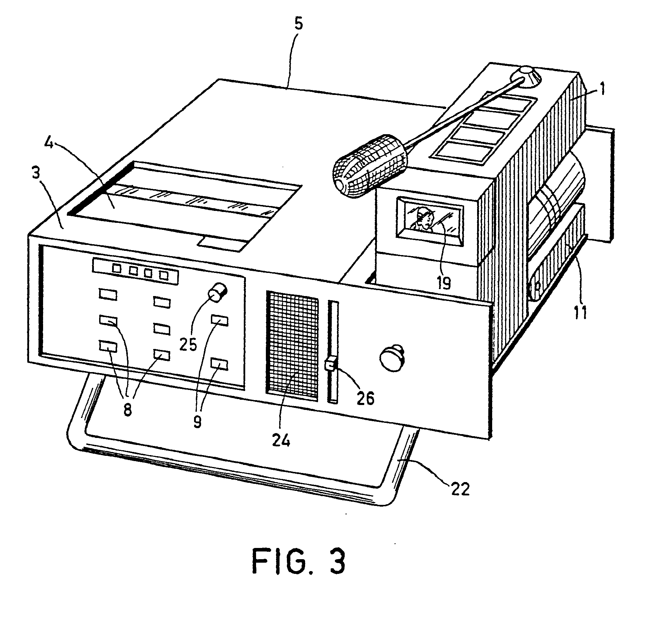

When the camera is placed in the case, both the system shown in Figs. 1 to 3 and the system shown in Figs. 4 and 5 can be used as a stationary picture-reproducing system which can be placed on a table top for the reproduction of the video signals previously recorded on the magnetic tape. The camera 1 is equipped with a picture screen 19 which during recording can be viewed through a removable eyepiece 20. The camera 101 has a similar built-in picture screen. Fig. 3 and Fig. 5 show the situation in which the systems may be used as stationary picture-reproducing systems. In Fig. 3 the camera 1, with grip 11 folded in, is placed in the case, the case being provided with a wall portion 21 which supports the camera in this position. If desired, special provisions may be made, such as ridges or clamping members, which ensure that the camera remains in place in the case. In this position the picture screen 19 can be viewed from outside the case. The aerial 15 is disposed in the case, where it cooperates with wireless transmission means in the case for the wireless transmission of signals between the camera and the system parts in the case. The video recorder 3 comprises known means for reading and reproducing the video signals recorded on the magnetic tape and all the means necessary for fast rewinding of the magnetic tape in the cassette and subsequently playing back said tape at the correct playing speed. The various functions can be controlled with the buttons 8, which in their turn actuate the necessary switching means for controlling the said functions. Supporting means in the form of a collapsible supporting bracket 22 support the case 5 on a supporting surface such as a tabletop in such a manner that the picture screen extends substantially perpendicularly to the line of sight of a person sitting at the table and viewing the screen 19. Instead of the screen 19 in the camera a separate screen may be provided in the case. This is. necessary if the camera is provided with an optical viewfinder instead of an electronic viewfinder.

In the system shown in Figs. 4 and 5 the camera is positioned differently in the case 105, namely in such a way that when the system is used as a stationary picture reproducing system the picture on the built-in picture screen of the camera can be viewed from outside the case *via* an optical magnifier in the form of a rectangular lens 122 mounted in an aperture in a side wall 123 of the case. Alternatively, an optical magnifier may be accommodated elsewhere in the case and may be swung out, set up or otherwise positioned at a correct location relative to the screen in order to obtain the desired magnification of the picture, when desired.

The system shown in Figs. 1 to 3 comprises a microphone 23 which is pivotally mounted on top of the camera. The video recorder 3 is adapted to record the audio signals from the microphone on the magnetic tape in synchronism with the video signals. During use as a stationary picture reproducing system, see Fig. 3, the system is suitable for playing back the audio signals previously recorded on the magnetic tape and for this purpose it is provided with a loudspeaker 24 in the case 5 and the necessary electronic means for reading and, *via* the loudspeaker 24, reproducing the audio signals on the magnetic tape. Independently of other functions the loudspeaker can be switched on and off by means of a pushbutton 25, whilst in addition there is provided a slide potentiometer with a slide knob 26 for controlling the sound level. The system is also capable of asynchronous addition of sound to the previously recorded pictures during reproduction of the pictures. As is shown in Fig. 3, the sound can reach the microphone 23 from outside the case. *Via* the previously mentioned wireless transmission means the sound signals received by the microphone during picture reproduction can be transmitted to the recorder 3 and can be recorded on the tape by the means provided for this purpose during reproduction of the picture signals.

Within the scope of the invention as defined by the claims many other embodiments of the invention are possible. The recorder need not be a magnetic-tape cassette recorder but may be, for example, an optical or magnetic-disc recorder.

The recorder will always be accommodated in the case, at least during use as a portable video recording system; the case also serves as an everready case for the camera and the system can be set to stand-by in such a way that for making a recording it is necessary only to take the camera out of the case and to press the recording button. The case may be provided with a built-in picture screen such as a cathode ray tube or a liquid crystal array. The built-in picture screen may be used during operation of the system as a stationary picture-reproducing system but may also be employed during recording, in particular when the camera has a remote-control facility.

## Claims

1. A portable electronic video recording system, comprising:
— a portable electronic camera (1),
— a switching means for switching the power-supply voltage on and off and for controlling the various functions of the system, which means comprise stand-by switching means for switching on and switching off the electric power supply to other switching means so that the system is ready for making a recording, and recording switching means for controlling the recording function of the system after the stand-by switching means have been switched on,
— a portable recorder (3) for recording picture signals supplied by the camera on a recording medium,
— a case (5) having a recording compartment for carrying the recorder and provided with carrying means, and
— transmission means for the transmission of signals and, if desired the power-supply voltage between the camera and the system parts in the case, which parts comprise at least the recorder and may comprise a voltage source, characterized in that:
a) the case (5) has a camera compartment (14) for accommodating and carrying the camera (1),
b) if the transmission means comprise connecting means for establishing a connection between the camera and the system parts in the case, these connecting means will readily allow the camera to be placed in the camera compartment, to be carried therein and to be removed therefrom whilst said connection is maintained, and
c) after said connecting means, if present, have been connected to establish said connection, and after the stand-by switching means have been switched on while the camera is still in the camera compartment of the case, to start recording it is necessary to remove the camera from the case and to actuate the recording switching means.

2. A portable electronic video recording system as claimed in Claim 1, comprising connecting means in the form of a flexible cable (116) having at least one core for the transmission of wide-band information signals, which connecting means are incorporated in the transmission means, characterized in that:

— said core comprises an optical fibre,
— the camera is equipped with an optical transmitter (117) comprising a radiation source and modulation means for modulating the intensity of the radiation emitted by the radiation source with the wide-band information, and
— the case contains an optical receiver which comprises a radiation-sensitive electronic element for converting the radiation modulation into an electrical modulation. (Figs. 4—5).

3. A portable electronic video recording system as claimed in Claim 1, comprising connecting means in the form of a flexible cable (116) incorporated in the transmission means, characterized in that the case contains an automatic cable winder (119) which comprises a rotatable drum (120) for taking up and unwinding the cable, a drive means (121) for driving the drum during take-up and a locking device for locking the drum when the cable is fully or partly unwound (Fig. 4).

4. A portable electronic video recording system as claimed in Claim 1, characterized in that the transmission means comprise wireless transmission means (15—16) for the wireless transmission of signals between the camera (1) and system parts in the case (5), which means comprise at least one transmitter and one receiver (Fig. 1).

5. A portable electronic video recording system as claimed in Claim 4, comprising a case (5) which is provided with a shoulder strap (2), characterized in that the strap (2) carries aerial means (16) for the wireless transmission means, which aerial means are connected to the system parts in the case (Fig. 1).

6. A portable electronic video recording system as claimed in Claim 1, characterized in that the system, when the camera (1) is in the case (5), can be used as a stationary picture-reproducing system that can be placed on a table top for reproducing video signals previously recorded on the recording medium, and for this purpose the system comprises:
— a picture screen (19),
— means for reading the video signals on the recording medium and reproducing them, on the picture screen,
— means for carrying out at least the "fast reverse" and "play" functions of the recorder, and
— switching means for controlling these functions.

7. A portable electronic video recording system as claimed in Claim 6, characterized in that the system comprises supporting means which are capable of supporting the case on a table top in an oblique position relative to the table top.

8. A portable electronic video recording system as claimed in Claim 7, the case (5) being substantially of box form and comprising two major walls interconnected by side walls, characterized in that the supporting means (22) are arranged on a major wall so as to be movable between a rest position and a supporting position and in the supporting position can support the case in said oblique position on a table top with said major wall facing the table top.

9. A portable electronic video recording system as claimed in Claim 6, the camera (1) being provided with an electronic view-finder with a picture screen (19) which is built-in to the camera, characterized in that during use of the system as a stationary picture-reproducing system,

1. — the built-in picture screen on the camera can be viewed from outside the case, and

2. — *via* the transmission means the picture signals can be transmitted from the recorder (3) to the built-in picture screen of the camera (1),

so that this built-in picture screen can be used for reproducing.the video signals previously recorded on the recording medium.

10. A portable electronic video recording system as claimed in Claim 9, characterized in that the system comprises an optical magnifier which can be carried in the case (105), for magnifying the picture on the built-in picture screen of the camera when the system is used as a stationary picture reproducing system. (Fig. 5).

11. A portable electronic video recording system as claimed in Claim 10, characterized in that the case (105) has a wall (123) with an aperture through which the built-in picture screen on the camera can be viewed when the system is used as a stationary picture-reproducing system, and the optical magnifier (122) is arranged in said aperture.

12. A portable electronic video recording system as claimed in Claim 6, the system being equipped with a microphone (23) and the recorder (3) being adapted to record audio signals from the microphone on the recording medium, characterized in that the system, when used as a stationary picture reproducing system, is capable of reproducing sound signals recorded on the recording medium and comprises a loudspeaker and means for reading and, *via* the loudspeaker, reproducing the sound signals recorded on the recording medium.

13. A portable electronic video recording system as claimed in Claim 12, characterized in that the loudspeaker is accommodated in the case and in that switching means (25) are provided for switching on and off the loudspeaker independently of other functions and control means are provided for controlling the level of sound produced by the loudspeaker.

14. A portable electronic video recording system as claimed in Claim 12, the camera being equipped with a microphone for recording sound signals in synchronism with the video signals, characterized in that during use as a stationary picture-reproducing system the system is capable of asynchronous addition of sound to the recorded pictures, for which purpose

1. — the microphone (23) can intercept sounds from outside the case, and

2. — sound signals from the microphone can be transmitted to the recorder (3) *via* the transmission means and the system comprises means for recording the audio signals during reproduction of the video signals.

**Revendications**

1. Système d'enregistrement vidéo électronique portable comprenant:

— une caméra électronique portable (1),

— des moyens de commutation pour commuter la tension d'alimentation en service et hors service et pour commander les diverses fonctions du système, ces moyens comprenant des moyens de commutation d'attente pour enclencher et déclencher l'alimentation électrique vers d'autres moyens de commutation de telle sorte que le système soit prêt à effectuer un enregistrement, et des moyens de commutation d'enregistrement pour commander la fonction d'enregistrement du système après que les moyens de commutation d'attente aient été enclenchés,

— un enregistreur portable (3) pour enregistrer des signaux d'image fournis par la caméra sur un support d'enregistrement,

— un sac (5) comportant un compartiment à enregistreur destiné à transporter l'enregistreur et pourvu d'un moyen de transport, et

— des moyens de transmission pour la transmission de signaux et, si on le souhaite, de la tension d'alimentation électrique entre la caméra et les parties du système présentes dans le sac, ces parties comprenant au moins l'enregistreur et pouvant comprendre une source de tension, caractérisé en ce que:

a) le sac (5) comporte un compartiment à caméra (14) destiné à recevoir et à transporter la caméra (1),

b) si les moyens de transmission comprennent des moyens de connexion pour établir une connexion entre la caméra et les parties du système présentes dans le sac, ces moyens de connexion permettent facilement de placer la caméra dans le compartiment à caméra, de l'y transporter et de l'en retirer tandis que la connexion reste maintenue, et

c) lorsque les moyens de connexion, s'ils sont présents, ont été connectés pour établir la connexion et que les moyens de commutation d'attente ont été enclenchés tandis que la caméra se trouve encore dans le compartiment à caméra du sac, pour faire démarrer l'enregistrement, il faut retirer la caméra du sac et actionner les moyens de commutation d'enregistrement.

2. Système d'enregistrement vidéo électronique portable suivant la revendication 1, comprenant des moyens de connexion ayant la forme d'un câble flexible (116) comportant au moins une âme pour la transmission de signaux d'information à large bande, ces moyens de connexion étant incorporés dans les moyens de transmission, caractérisé en ce que:

— l'âme comprend une fibre optique,

— la caméra est équipée d'un émetteur optique (117) comprenant une source de rayonnement et un dispositif de modulation pour moduler l'intensité du rayonnement émis par la source de rayonnement avec l'information à large bande, et

— le sac contient un récepteur optique qui comprend un élément électronique sensible au rayonnement pour convertir la modulation du rayonnement en une modulation électrique (Fig. 4, 5).

3. Système d'enregistrement vidéo électronique portable suivant la revendication 1, comprenant des moyens de connexion ayant la forme d'un câble flexible (116) incorporé dans les moyens de transmission, caractérisé en ce que le sac contient un enrouleur de câble automatique (119) qui comprend un tambour rotatif (120) destiné à envider et à dévider le câble, un dispositif d'entraînement (121) pour entraîner le tambour pendant l'enroulage et un dispositif de blocage pour bloquer le tambour lorsque le câble est complètement ou partiellement dévidé (Fig. 4).

4. Système d'enregistrement vidéo électronique portable suivant la revendication 1, caractérisé en ce que les moyens de transmission comprennent des moyens de transmission sans fil (15, 16) pour la transmission sans fil de signaux entre la caméra (1) et des parties du système présentes dans le sac (5), ces moyens comprenant au moins un émetteur et un récepteur (Fig. 1).

5. Système d'enregistrement vidéo électronique portable suivant la revendication 4, comprenant un sac 5 qui est pourvu d'une sangle d'épaule (2), caractérisé en ce que la sangle (2) porte une antenne (16) pour les moyens de transmission sans fil, cette antenne étant connectée aux parties du système présentes dans le sac (Fig. 1).

6. Système d'enregistrement vidéo électronique portable suivant la revendication 1, caractérisé en ce que le système, lorsque la caméra (1) se trouve dans le sac (5), peut être utilisé comme système de reproduction d'image fixe qui peut être placé sur une table pour reproduire des signaux vidéo précédemment enregistrés sur le support d'enregistrement et, à cet effet, le système comprend:
— un écran (19),
— des moyens pour lire les signaux vidéo sur le support d'enregistrement et pour les reproduire sur l'écran,
— des moyens pour effectuer au moins les fonctions "rebobinage rapide" et "lecture" de l'enregistreur, et
— des moyens de commutation pour commander ces fonctions.

7. Système d'enregistrement vidéo électronique portable suivant la revendication 6, caractérisé en ce qu'il comprend des moyens de support qui sont à même de supporter le sac sur une table dans une position oblique par rapport au dessus de cette table.

8. Système d'enregistrement vidéo électronique portable suivant la revendication 7, le sac (5) étant en substance quadrangulaire et comprenant deux parois principales reliées par des parois latérales, caractérisé en ce que les moyens de support (22) sont disposés sur une paroi principale de manière à être mobiles entre une position de repos et une position de support et peuvent, dans la position de support, supporter le sac dans la position oblique sur une table, la paroi principale étant tournée vers le dessus de la table.

9. Système d'enregistrement vidéo électronique portable suivant la revendication 6, la caméra (1) étant pourvue d'un viseur électronique avec un écran (19) qui est incorporé dans la caméra, caractérisé en ce que pendant l'utilisation du système comme système de reproduction d'image fixe,
1) l'écran incorporé de la caméra peut être regardé de l'extérieur du sac, et
2) par l'intermédiaire des moyens de transmission, les signaux d'image peuvent être transmis de l'enregistreur (3) à l'écran incorporé de la caméra (1),
de sorte que cet écran incorporé peut être utilisé pour reproduire les signaux vidéo précédemment enregistrés sur le support d'enregistrement.

10. Système d'enregistrement vidéo électronique portable suivant la revendication 9, caractérisé en ce qu'il comprend une loupe qui peut être transportée dans le sac (105) pour agrandir l'image présente sur l'écran incorporé de la caméra lorsque le système est utilisé comme système de reproduction d'image fixe (Fig. 5).

11. Système d'enregistrement vidéo électronique portable suivant la revendication 10, caractérisé en ce que le sac (105) comporte une paroi (123) présentant une ouverture à travers laquelle l'écran incorporé de la caméra peut être regardé lorsque le système est utilisé comme système de reproduction d'image fixe et la loupe (122) est disposée dans l'ouverture.

12. Système d'enregistrement vidéo électronique portable suivant la revendication 6, équipé d'un microphone (23), et l'enregistreur (3) étant à même d'enregistrer des signaux audio du microphone sur le support d'enregistrement, caractérisé en ce que le système, lorsqu'il est utilisé comme système de reproduction d'image fixe, est à même de reproduire des signaux de son enregistrés sur le support d'enregistrement et comprend un haut-parleur et des moyens pour lire et, par l'intermédiaire du haut-parleur, reproduire les signaux de son enregistrés sur le support d'enregistrement.

13. Système d'enregistrement vidéo électronique portable suivant la revendication 12, caractérisé en ce que le haut-parleur est logé dans le sac et des moyens de commutation (25) sont prévus pour enclencher et déclencher le haut-parleur indépendamment d'autres fonctions, des moyens de commande étant prévus pour régler le niveau du son produit par le haut-parleur.

14. Système d'enregistrement vidéo électronique portable suivant la revendication 12, la caméra étant équipée d'un microphone pour enregistrer des signaux de son en synchronisme avec les signaux vidéo, caractérisé en ce que, pendant son utilisation comme système de reproduction d'image fixe, le système est à même d'ajouter de manière asynchrone du son aux images enregistrées et, à cet effet:

1 — le microphone (23) peut capter des sons provenant de l'extérieur du sac, et

2 — des signaux de son du microphone peuvent être transmis à l'enregistreur (3) par l'intermédiaire des moyens de transmission et le système comprend des moyens pour enregistrer les signaux audio pendant la reproduction des signaux vidéo.

**Patentansprüche**

1. Tragbares elektronisches Video-Aufzeichnungssystem mit
— einer tragbaren elektronischen Kamera (1),
— Schaltmitteln zum Ein- und Ausschalten der elektrischen Speisespannung und zum Steuern der jeweiligen Funktionen des Systems, bestehend aus: Bereitschaftschaltmitteln zum Ein- und Ausschalten der elektrischen Speisung für andere Schaltmittel, so dass das System zum Aufnehmen bereit ist und Aufnahmeschaltmitteln zum nach dem Einschalten der Bereitschaftsschaltmittel Steuern der Aufnahmefunktion des Systems,
— einem tragbaren Aufnahmegerät (3) zum auf einem Aufzeichnungsmedium Speichern von der Kamera gelieferter Bildsignale,
— einer Tragetasche (5) mit einem Fach für das Aufnahmegerät zum Tragen des Aufnahmegerätes und mit Tragmitteln und
— Übertragungsmitteln zum Übertragen von Signalen und gewünschtenfalls der Speisespannung zwischen der Kamera und in der Tasche befindlichen Teilen des Systems, wobei diese Teile wenigstens das Aufnahmegerät und ggf. eine Spannungsquelle enthalten, dadurch gekennzeichnet, dass
a) die Tragetasche (5) mit einem Kamerafach (14) versehen ist zum Aufnehmen und Transportieren der Kamera (1),
b) dass, wenn die Übertragungsmittel Verbindungsmittel aufweisen zum Herstellen einer Verbindung zwischen der Kamera und den in der Tragetasche vorhandenen Systemteilen, diese Verbindungsmittel es ermöglichen, dass die Kamera in dem Kamerafach aufbewahrt, darin transportiert und daraus entfernt werden kann, während die Verbindung beibehalten wird und
c) dass es, nachdem die ggf. vorhandenen Verbindungsmittel zum Herstellen der genannten Verbindung angeschlossen sind und nachdem die Bereitschaftsschaltmittel zum Starten einer Aufnahme eingeschaltet worden sind, während die Kamera sich noch in dem Kamerafach der Tasche befindet, notwendig ist, die Kamera der Tasche zu entnehmen und die Aufnahmeschaltmittel zu betätigen.

2. Tragbares elektronisches Video-Aufnahmesystem nach Anspruch 1, mit Verbindungsmitteln in Form eines biegsamen Kabels (116) mit wenigstens einer Ader zum Übertragen von Breitbandinformationssignalen, wobei die Verbindungsmittel sich in den Übertragungsmitteln befinden, dadurch gekennzeichnet, dass
— die genannte Ader eine optische Faser aufweist,

— die Kamera mit einem optischen Sender (117) mit einer Strahlungsquelle und mit Modulationsmitteln zum Modulieren der Intensität der von der Strahlungsquelle ausgestrahlten Strahlung mit der Breitbandinformation und
— dass die Tasche einen optischen Empfänger enthält, der ein strahlungsempfindliches elektronisches Element aufweist zum Umwandeln der Strahlungsmodulation in eine elektrische Modulation (Fig. 4—5).

3. Tragbares elektronisches Video-Aufnahmesystem nach Anspruch 1, mit Verbindungsmitteln in Form eines biegsamen Kabels (116) in den Übertragungsmitteln, dadurch gekennzeichnet, dass die Tasche eine automatische Kabelaufwickelvorrichtung (119) aufweist, die eine drehbare Trommel (120) zum Auf- und Abwickeln des Kabels aufweist, eine Antriebsvorrichtung (121) zum Antreiben der Trommel beim Aufwickeln sowie eine Sperrvorrichtung zum Sperren der Trommel, wenn das Kabel völlig oder teilweise abgewickelt ist (Fig. 4).

4. Tragbares elektronisches Video-Aufnahmesystem nach Anspruch 1, dadurch gekennzeichnet, dass die Übertragungsmittel drahtlose Übertragungsmittel (15—16) zum drahtlosen Übertragen von Signalen zwischen der Kamera (1) und Teilen des Systems in der Tasche (5) aufweisen, wobei diese Mittel wenigstens einen Sender und einen Empfänger aufweisen (Fig. 1).

5. Tragbares elektronisches Video-Aufnahmesystem nach Anspruch 4, mit einer Tasche (5) mit einem Tragegurt (2) dadurch gekennzeichnet, dass der Gurt (2) Antennenmittel (16) aufweist für die drahtlosen Übertragungsmittel, wobei diese Antennenmittel mit den Teilen des Systems in der Tasche verbunden sind (Fig. 1).

6. Tragbares elektronisches Video-Aufnahmesystem nach Anspruch 1, dadurch gekennzeichnet, dass, wenn die Kamera (1) sich in der Tasche (5) befindet, das System als ortsfestes auf den Tisch stellbares Bildwiedergabesystem verwendet werden kann, zum Wiedergeben von Video-Signalen, die vorher auf das Aufzeichnungsmedium aufgenommen wurden und wobei das System zu diesem Zweck folgende Elemente aufweist:
— einen Bildschirm (19),
— Mittel zum Auslesen der Video-Signale auf dem Aufzeichnungsmedium und zum Wiedergeben derselben an einem Bildschirm,
— Mittel zum Durchführen mindestens der "Schnellrücklauf"—und der "Spiel"—Funktion des Gerätes, sowie
— Schaltmittel zum Steuern dieser Funktionen.

7. Tragbares elektronisches Video-Aufnahmesystem nach Anspruch 6, dadurch gekennzeichnet, dass das System Tragemittel aufweist, welche die Tasche auf einer Tischplatte in einer schrägen Lage gegenüber der Tischplatte unterstützen.

8. Tragbares elektronisches Video-Aufnahmesystem nach Anspruch 7, wobei die Tasche im wesentlichen die Form eines Kartons hat mit zwei Hauptwänden, die durch Seitenwände miteinander verbunden sind, dadurch gekennzeichnet, dass die Tragemittel (22) an eine Hauptwand vorgesehen sind und zwischen einer Ruhelage und einer Unterstützungslage beweglich sind und in der Unterstützungslage die Tasche in der genannten schrägen Lage auf der Tischplatte unterstützen kann, wobei die Hauptwand der Tischplatte zugewandt ist.

9. Tragbares elektronisches Video-Aufnahmesystem nach Anspruch 6, wobei die Kamera (1) mit einem elektronischen Sucher mit einem Bildschirm (19) versehen ist, der in der Kamera eingebaut ist, dadurch gekennzeichnet, dass im Gebrauch des Systems als ortsfestes Bildwiedergabesystem

1. der eingebaute Bildschirm an der Kamera von ausserhalb der Tasche betrachtet werden kann und

2. die Bildsignale mittels der Übertragungsmittel von dem Aufnahmegerät (3) dem Bildwiedergabeschirm der Kamera (1) zugeführt werden können, so dass dieser eingebaute Bildschirm zum Wiedergeben der Video-Signale verwendet werden kann, die vorher auf dem Aufzeichnungsmedium aufgenommen wurden.

10. Tragbares elektronisches Video-Aufnahmesystem nach Anspruch 9, dadurch gekennzeichnet, dass das System eine optische Bildvergrösserrungsvorrichtung aufweist, die in der Tasche (105) aufbewahrt werden kann, zum Vergrössern des Bildes an dem eingebauten Bildschirm der Kamera, wenn das System als ortsfestes Bildwiedergabesystem verwendet wird (Fig. 5).

11. Tragbares elektronisches Video-Aufnahmesystem nach Anspruch 10, dadurch gekennzeichnet, dass die Tasche (105) eine Wand (123) mit eine Öffnung aufweist, durch die der eingebaute Bildschirm der Kamera betrachtet werden kann, wenn das System als ortsfestes Bildwiedergabesystem verwendet wird und die optische Bildvergrösserungsvorrichtung (122) in der genannten Öffnung angeordnet ist.

12. Tragbares elektronisches Video-Aufnahmesystem nach Anspruch 6, wobei das System mit einem Mikrophon (23) und einem Aufnahmegerät (3) versehen ist, mit dem Audio-Signale von dem Mikrophon auf dem Aufzeichnungsmedium aufgenommen werden können, dadurch gekennzeichnet, dass das System, wenn es als ortsfestes Bildwiedergabesystem verwendet wird, Audio-Signale wiedergeben kann, die auf dem Aufzeichnungsmedium aufgenommen wurden und einen Lautsprecher aufweist sowie Mittel zum Auslesen und über den Lautsprecher Wiedergeben der Audio-Signale, die auf dem Aufzeichnungsmedium aufgenommen wurden.

13. Tragbares elektronisches Video-Aufnahmesystem nach Anspruch 12, dadurch gekennzeichnet, dass der Lautsprecher in der Tasche angeordnet ist und dass die Schaltmittel (25) zum Ein- und Ausschalten des Lautsprechers unabhängig von den anderen Funktionen sowie Steuermittel vorgesehen sind zum Steuern der Lautstärke des von dem Lautsprecher wiedergegebenen Tones.

14. Tragbares elektronisches Video-Aufnahmesystem nach Anspruch 12, wobei die Kamera mit einem Mikrophon zum Aufnehmen von Audio-Signalen synchron zu den Video-Signalen ausgebildet ist, dadurch gekennzeichnet, dass bei Verwendung des Systems als ortsfestes Bildwiedergabesystem dieses System zu dem aufgenommenen Bild asynchron ein Tonsignal hinzufügen kann, zu welchem Zweck:

1. das Mikrophon (23) Audio-Signale aufnehmen kann von ausserhalb der Tasche und

2. Audio-Signale von dem Mikrophon zu dem Aufnahmegerät (3) übertragen werden konnen und zwar über die Übertragungsmittel und dass das System Mittel aufweist zum Aufnehmen der Audio-Signale während der Wiedergabe der Video-Signale.

FIG.1

FIG.2

# FIG. 3

FIG.4

FIG.5